Europäisches Patentamt

(19) European Patent Office

Office européen des brevets

(11) Veröffentlichungsnummer: **0 063 279**
**B1**

(12) # EUROPÄISCHE PATENTSCHRIFT

(45) Veröffentlichungstag der Patentschrift:
**18.12.85**

(51) Int. Cl.⁴: **H 05 B 7/101**

(21) Anmeldenummer: **82102769.5**

(22) Anmeldetag: **01.04.82**

(54) Vorrichtung zum Annippeln von Elektroden in einem Elektroofen.

(30) Priorität: **16.04.81 DE 3115628**

(43) Veröffentlichungstag der Anmeldung:
**27.10.82 Patentblatt 82/43**

(45) Bekanntmachung des Hinweises auf die Patenterteilung:
**18.12.85 Patentblatt 85/51**

(84) Benannte Vertragsstaaten:
**AT BE CH DE FR GB IT LI LU NL SE**

(56) Entgegenhaltungen:
**DE - A - 1 690 556**
**DE - A - 2 306 483**
**DE - A - 2 918 757**
**US - A - 824 153**

(73) Patentinhaber: **Arc Technologies Systems, Ltd., Box 61, Georgetown Grand Cayman (KY)**

(72) Erfinder: **Schudlich, Kurt, Hartortring 48, D-5810 Witten-Annen (DE)**
Erfinder: **Vielstich, Günter, Friedrich-Liszt-Strasse 14, D-Witten-Heven (DE)**
Erfinder: **Mühlenbeck, Josef, Ing. grad., Columbusstrasse 1, D-5802 Wetter 4 (DE)**
Erfinder: **Otto, Josef, Dr.-Ing., Am Wasserturm 5, D-5802 Wetter 4 (DE)**
Erfinder: **Bauer, Hannsgeorg, Dr.-Ing., Platanenweg 21, D-5810 Witten-Bommern (DE)**
Erfinder: **Zöllner, Dieter H., Dr. Dipl.-Chem., Händelstrasse 19, D-8501 Schwaig b. Nürnberg (DE)**
Erfinder: **Rittmann, Friedrich, Am Buck 18, D-8501 Rückersdorf b. Nürnberg (DE)**

(74) Vertreter: **Kügele, Bernhard, c/o DST SA 3, Route de Troinex, CH-1227 Carouge/GE (CH)**

**Beschreibung**

Vorrichtung zum Annippeln von Elektrodenabschnitten an eine in einem Elektroofen insbesondere Lichtbogenofen vertikal und drehfest in eine Elektrodenfassung angeordnete Elektrode mittels eines die Verbindung bildenden Schraubnippels, bestehend aus einem äusseren im wesentlichen hohlzylindrischen Element und einem koaxial im äusseren Element angeordneten inneren, ebenfalls hohlzylindrischen Element, das mittels eines Antriebs relativ in bezug auf das äussere Element drehbar ist, wobei der anzunippelnde Elektrodenabschnitt mit dem inneren Element drehfest verbindbar ist und das äussere Element in koaxialer Ausrichtung zur Elektrode, mit der der Elektrodenabschnitt zu verbinden ist, drehfest in bezug auf den Ofen mit der Elektrodenfassung der diesbezüglichen Elektrode kuppelbar ist, wobei das innere Element als Kupplungsvorrichtung ausgebildet ist.

Die angesprochenen Elektroden sind herkömmliche, ganz aus sich verbrauchendem Material, z.B. Graphit, bestehende Elektroden.

Bei Lichtbogenöfen üblicher Grösse, die jeweils mit drei Elektroden der angesprochenen Art ausgerüstet sind, muss mindestens einmal pro täglicher Betriebszeit eine Elektrode durch Anschliessen eines neuen aktiven Elektrodenabschnitts neu für den weiteren Betrieb gerüstet werden. Dieses Rüsten erfolgt noch vielfach manuell. Bei der konventionellen Elektrode erfolgt dabei das Annippeln des neuen aktiven Elektrodenabschnitts an das obere Ende des im wesentlichen verbrauchten Elektrodenstrangs in der Weise, dass ein neuer Elektrodenabschnitt mit Hilfe eines Hebezeugs, z.B. des Hallenkrans, über den in seiner Elektrodenfassung am Ofen eingespannten Elektrodenstrang bewegt wird. Danach wird der neue Elektrodenstrang, z.B. mit dem bereits an seinem unteren Ende angebrachten Schraubnippel, derart abgesenkt, dass der Schraubnippel des neuen Elektrodenabschnitts in die Schachtel des oberen Endes des Elektrodenstrangs eingeführt wird. Danach erfolgt mit Hilfe von Schellen auf manuelle Weise das Annippeln des neuen Elektrodenabschnitts an das obere Ende des Elektrodenstrangs.

Ein derartiger Annippelvorgang hat in erster Linie den Nachteil, dass die Bedienungspersonen auf den Deckel des Ofens müssen, wo sie nicht nur grosser Hitze, sondern auch den aus dem Ofen austretenden Kohlenoxid- und Kohlendioxid-Gasen ausgesetzt sind. Dabei beträgt die Arbeitszeit mehrere Minuten. Darüber hinaus hängt es von dem Können der Bedienungspersonen ab, ob der neue Elektrodenabschnitt korrekt und mit dem erforderlichen Anzugsmoment mit dem übrigen Elektrodenstrang verbunden wird. Das Anzugsmoment zwischen den neu verbundenen Elektrodenabschnitten beeinflusst aber entscheidend den Übergangswiderstand zwischen den Elektrodenabschnitten und damit die Arbeitsweise und den Energieverbrauch der Elektrode.

Zur Behebung dieser Schwierigkeiten sind bereits mehrere Vorrichtungen zum Annippeln von herkömmlichen Elektroden vorgeschlagen worden.

Eine bekannte Vorrichtung dieser Art (DE-OS 1 690 556) besteht aus zwei ineinander koaxial angeordneten Zylinder. Der innere Zylinder ist mittels eines Antriebs in bezug auf den äusseren Zylinder drehbar. Der innere Zylinder weist an seinem unteren Ende an das untere Ende des anzunippelnden Elektrodenabschnitts radial anpressbare Spannmittel auf. Der äussere Zylinder ist in der Einsatzstellung gegen die ofenfeste Elektrodenfassung drehfest abstützbar.

Diese Vorrichtung ermöglicht ein maschinelles Annippeln eines Elektrodenabschnitts an eine in einer ofenfesten Elektrodenfassung eingespannte Elektrode. Damit entfällt das nach den heutigen Arbeitsbedinungen kaum mehr zumutbare Arbeiten auf dem Deckel des in Betrieb befindlichen Ofens mit den weiteren damit zusammenhängenden Nachteilen.

Allerdings ist die beschriebene Vorrichtung relativ aufwendig ausgebildet. Es sind nämlich zwei Elektromotore vorgesehen, von denen der eine oberhalb des inneren Zylinders angeordnet ist und dem Einspannen des Elektrodenabschnittes durch eine axiale Relativbewegung zwischen den beiden Zylindern dient, während der andere Motor unweit des unteren Endes der Vorrichtung am äusseren Zylinder angeordnet ist und über einen Schneckentrieb den inneren Zylinder für den Annippelungsvorgang dreht. Diese Bauart ergibt ferner nicht nur eine recht grosse Bauhöhe der Vorrichtung, sondern auch in Ofennähe einen grossen Durchmesser. Besonders der letztgenannte Umstand hat sich recht nachteilig für die Bedienbarkeit der Vorrichtung erwiesen. Es kommt hinzu, dass beim Einspannen des Elektrodenabschnitts der als Spannbüchse ausgebildete innere Zylinder in Richtung seiner Längsachse gegenüber einem ihn umfassenden konischen Ring verschoben werden muss, so dass die Spannelemente zumindest zu Beginn der Einspannbewegung den Elektrodenabschnitt mechanisch beschädigen können; dies kann eine spätere Rissbildung in der Elektrode bedingen.

Zur Behebung dieser Nachteile ist die bekannte Vorrichtung dadurch weitergebildet worden (DE-AS 2 418 688), dass zwischen den beiden Zylindern ein dritter Zylinder (Zwischenzylinder) koaxial angeordnet ist, der zwecks Einspannens des anzunippelnden Elektrodenabschnittes in Richtung seiner Längsachse mittels einer Gewindemutter verschiebbar geführt ist, die über einen Zahn- oder Kettentrieb mittels eines neben dem oberen Teil des Aussenzylinders angeordneten Motors drehbar ist, der zum Annippeln des Elektrodenabschnitts auf die Drehung des Zwischenzylinders und des mit diesem drehfest verbundenen Innenzylinders bewirkt, wofür eine beim Spannvorgang den Innenzylinder gegen Drehung sichernde Arretierung gelöst wird.

Aufgrund der geschilderten Ausbildung besitzt diese Vorrichtung in Ofennähe einen den Elektrodendurchmesser nur geringfügig überschreitenden Aussendurchmesser. Ausserdem erfolgt das Spannen und das Annippeln nur noch mittels eines gemeinsamen Motors, der seitlich des Kopfes der Vorrichtung angeordnet ist. Zwar ergibt sich dadurch eine gewisse Verkürzung der Vorrichtungshöhe, die aber nach wie vor relativ gross ist, da der anzunippelnde neue Elektrodenabschnitt an seinem unteren Ende eingespannt wird, so dass die Vorrichtungshöhe nach wie vor wesentlich grösser ist als die Länge des Elektrodenabschnitts. Dies ist bei der zur Rede stehenden Vorrichtung deshalb von wesentlichem Nachteil, weil drei Zylinder vorgesehen sind, die die angesprochene Länge besitzen, wodurch die Vorrichtung nicht nur sehr materialaufwendig, sondern auch entsprechend schwer wird.

Beiden beschriebenen Vorrichtungen ist der Nachteil gemeinsam, dass der neue Elektrodenabschnitt mittels einer Spannvorrichtung erfasst wird, die eine komplizierte Ausbildung der gesamten Vorrichtung bedingt und darüber hinaus das Aufnehmen eines neuen Elektrodenabschnitts in die Annippelungsvorrichtung erschwert, da hierfür die Annippelungsvorrichtung exakt in bezug auf den Elektrodenabschnitt ausgerichtet und ebenso exakt die Annippelungsvorrichtung über den Elektrodenabschnitt geschoben werden muss.

Bei einer weiteren bekannten Annippelungsvorrichtung (DE-OS 2 338 741) ist der mit der Elektrode zu verbindende Elektrodenabschnitt in einem gegenüber der ofenseitigen Elektrodenfassung drehbaren und höhenverstellbaren Fassungsring festklemmbar. Hierfür ist an einem Traggerüst unter Zwischenschaltung eines Gehänges ein an dem Traggerüst geführter Tragring angeordnet, der eine Antriebseinrichtung trägt, über welche der an dem Tragring aufgehängte Fassungsring – der mit an seinem Umfang angeordneten, ölhydraulisch betätigten Klemmeinrichtungen für das in seinem Innenraum befindlichen Elektrodenteilstück versehen ist – unter Zwischenschaltung eines Zahnkranzes, der an dem Fassungsring befestigt und gegenüber dem ihn tragenden Tragring drehbar und entsprechend der Gewindesteigung der Nippelverbindung zwischen der Elektrode und dem Elektrodenabschnitt axial verfahrbar ist. Das Gehänge ist dabei quer zur Längsachse der Elektrode verschiebbar und das mit den zugehörigen Bauteilen als bewegliche Baueinheit ausgeführte Traggerüst mit Führungsteilen versehen, über welche es mit der Elektrodenfassung in genau definierter Lage verbindbar ist. Nach Fertigstellung der Nippelverbindung zwischen der Elektrode und dem auf diese aufgesetzten Elektrodenabschnitt kann die Annippelungsvorrichtung – nach Lösen der Klemmeinrichtung des Fassungsrings – mittels des Hebezeugs wieder von der Elektrodenfassung abgehoben und anderweitig verwendet werden.

Auch diese Vorrichtung weist einen relativ komplizerten Aufbau auf. Dies ist zum einen dadurch bedingt, dass eine aufwendige Klemmeinrichtung vorgesehen ist, und zum anderen dadurch, dass ein spezielles Traggerüst für den Tragring und den Fassungsring notwendig ist, wodurch sich insbesondere der Durchmesser der Vorrichtung senkrecht zur Achse der Elektrode erheblich vergrössert. Dies erschwert aber, wie bereits im Zusammenhang mit der erstgenannten Vorrichtung ausgeführt worden ist, die Bedienbarkeit der Vorrichtung.

Sämtliche der beschriebenen Annippelungsvorrichtungen erfassen mittels einer Klemmeinrichtung oder dgl. den Elektrodenabschnitt an dessen Mantelfläche. Nachdem die Elektroden aus einem gegenüber bestimmten mechanischen Beanspruchungen empfindlichen Material, z.B. Graphit, bestehen, ist die Gefahr gegeben, dass die Klemmeinrichtung die Oberfläche der Elektrode z.B. durch Bildung von Riefen, Kerben oder dgl., beschädigt. Kommt eine derartig beschädigte Fläche des Elektrodenabschnitts in den Bereich der Kontaktbacken des Ofens, wird durch die Beschädigungen der elektrische Übertragungswirkungsgrad erniedrigt mit der Folge eines erhöhten Stromverbrauchs bzw. eines gewissen Leistungsabfalls der Elektrode.

Aus der DE-A 1 690 556 ist eine Annippeleinrichtung bekannt, welche der eingangs beschriebenen Vorrichtung zum Annippeln von Elektrodenabschnitten an eine, in einem Elektroofen vertikal und drehfest in einer Elektrodenfassung angeordneten Elektrode, mittels eines, die Verbindung zwischen dem neuen Abschnitt und der bestehenden Elektrode bildenden Schraubnippels entspricht. Der Nachteil einer derartigen Vorrichtung besteht darin, dass die am inneren Zylinder angeordnete Klemmeinrichtung für das anzunippelnde neue Elektrodensegment eben dieses Elektrodensegment an seinem unteren Ende erfasst, und daher die gesamte Vorrichtung eine Bauhöhe aufweisen muss, welche zumindest der Höhe dieses Elektrodensegmentes entspricht.

Aus der US-A 824 153 ist eine Halteeinrichtung für Elektrodensegmente bekannt, welche eine Haltestange aufweist, welche mit einem, in das Elektrodensegment eingeschraubten Nippel verbunden werden kann. Diese Halteeinrichtung ist jedoch nicht zum Annippeln, sondern nur zum Aufhängen von Elektroden verwendbar, da sie keinerlei Einrichtungen zum Festhalten der Elektrodensegmente gegen Rotation aufweist.

In der Europäischen Patentanmeldung 82 102 768 (Veröffentlichungsnummer 0 063 278) ist eine Annippelvorrichtung beschrieben, welche der Annippelvorrichtung der vorliegenden Erfindung entspricht, welche jedoch direkt auf eine, einen Einhängebügel aufweisende Kombinationselektrode aufgesetzt wird, ohne einen die Verbindung zwischen der Annippeleinrichtung und der Elektrode bildenden Schraubnippel zu erfordern.

Der Erfindung liegt demgegenüber die Aufgabe zugrunde, eine Annippelungsvorrichtung der vorausgesetzten Art dahingehend weiterzubilden, dass eine derartige Vorrichtung nicht nur einen einfachen, robusten und zuverlässig arbeitenden Aufbau besitzt, sondern diese darüber hinaus ermöglicht, den neuen, anzunippelnden Elektrodenabschnitt schnell, exakt und ohne Handarbeit, zum Beispiel an der Lagerstelle von neuen Elektrodenabschnitten, zu erfassen, an die Einsatzstelle am Ofen zu transportieren und schnell und zuverlässig unmittelbar am Ofen mit der diesbezüglichen Elektrode zu verbinden.

Ferner soll die Annippelvorrichtung eine geringere Bauhöhe aufweisen und damit das Aufsetzen der Annippelvorrichtung auf eine in der Elektrodenfassung gehaltene Elektrode auch dort ermöglichen, wo aufgrund der beschränkten Höhe über den Elektroden das Annippeln mittels herkömmlicher Annippelungsvorrichtungen nicht über dem Ofen durchgeführt werden kann.

Diese Aufgabe wird bei einer Annippelungsvorrichtung der vorausgesetzten Art dadurch gelöst, dass die Kupplungsvorrichtung mit einem am oberen Ende des anzunippelnden Elektrodenabschnitts angeordneten Anschlusselement kuppelbar ist, und dass das Anschlusselement über einen Schraubnippel mit dem Elektrodenabschnitt verbunden ist.

Die erfindungsgemässe Annippelungsvorrichtung erlaubt aufgrund der geschilderten Ausbildung ein selbsttätiges, schnelles Erfassen und zügiges Annippeln eines neuen Elektrodenabschnitts an eine Elektrode bei einfachem, robustem und zuverlässig arbeitendem Aufbau der Vorrichtung. Die Annippelungsvorrichtung wird mittels eines üblichen Hebezeugs, z.B. des Hallenkrans, bewegt.

Im Zusammenhang mit konventionellen Elektroden ist die Arbeitsweise der erfindungsgemässen Annippelungsvorrichtung die folgende. Die Annippelungsvorrichtung wird mittels des Hebezeugs über den neuen, anzunippelnden Elektrodenabschnitt, z.B. am Lagerplatz mehrerer Elektrodenabschnitte, gefahren und auf diesen Elektrodenabschnitt abgesenkt. Dabei wird das als Kupplungsvorrichtung ausgebildete innere Element automatisch mit dem Verbindungselement am oberen Ende des anzunippelnden Elektrodenabschnitts gekuppelt. Die Annippelungsvorrichtung wird dann mit dem derart aufgenommenen Elektrodenabschnitt über den diesbezüglichen Elektrodenstrang am Ofen gefahren und auf diesen abgesenkt. Der der Verbindung des unteren Endes des Elektrodenabschnitts mit dem Elektrodenstrang dienende Schraubnippel ist z.B. in das untere Ende des neuen Elektrodenabschnitts eingeschraubt. Zur Säuberung der Schachtel des oberen Endes des Elektrodenstrangs kann die Vorrichtung mit einer pneumatisch arbeitenden Reinigungsvorrichtung versehen sein, die einen Druckluftstrahl in die Schachtel des Elektrodenstrangs bläst, der Verunreinigungen entfernt, so dass sich die Gewinde des Schraubnippels und der Schachtel des Elektrodenstrangs leichtgängig und exakt verbinden können. Für den Annippelungsvorgang wird das äussere Element der erfindungsgemässen Annippelungsvorrichtung mit der Elektrodenfassung des diesbezüglichen Elektrodenstrangs drehfest gekuppelt. Für den Schraubvorgang wird das innere Element in bezug auf das äussere Element durch den Antrieb in der entsprechenden Richtung gedreht und zugleich die komplette Annippelungsvorrichtung durch den Kran abgesenkt. Die Absenkbewegung kann durch ein Programm oder dgl. gesteuert werden. Nach dem Verbinden des Elektrodenabschnitts mit dem Elektrodenstrang wird das als Kupplungsvorrichtung ausgebildete innere Element automatisch von dem angenippelten Elektrodenabschnitt gelöst, so dass die Annippelungsvorrichtung wieder abgehoben, vom Ofen entfernt und einem neuen Einsatz zugeführt werden kann.

Die erfindungsgemässe Annippelungsvorrichtung zeichnet sich durch einen einfachen und gewichtssparenden Aufbau aus. Sowohl das äussere als auch das innere Element können bezüglich ihrer axialen Länge relativ kurz gehalten werden. Das äussere Element muss nur mit entsprechenden Mitteln, z.B. Stäben oder dergleichen, versehen werden, um es mit der Fassung der jeweiligen Elektrode am Ofen drehfest verbinden zu können. Das innere Element, das als Kupplungsvorrichtung ausgebildet ist, wird mit dem oberen Ende des Elektrodenabschnitts verbunden. Es muss deshalb entgegen den beiden eingangs geschilderten Vorrichtungen nicht in etwa die Länge der Elektrodenabschnitte haben, sondern kann erheblich kürzer ausgebildet sein.

Durch die Ausgestaltung des inneren Elements als Kupplungsvorrichtung arbeitet die erfindungsgemässe Annippelungsvorrichtung schnell und zuverlässig. Darüber hinaus trägt auch die Ausbildung als Kupplungsvorrichtung zum einfachen Aufbau der Gesamtanordnung bei.

Ein weiterer Vorteil der erfindungsgemässen Annippelungsvorrichtung besteht darin, dass sie ohne grosse Umrüstungsmassnahmen sowohl für das Annippeln konventioneller Elektroden als auch zum Betrieb mit sogenannten Kombinationselektroden geeignet ist, die aus einem permanent brauchbaren oberen Abschnitt, z.B. einem gekühlten Metallschaft, bestehen, an dessen unterem Ende aktive Elektrodenabschnitte, z.B. aus Graphit, anschliessbar sind. Der obere permanente Abschnitt von Kombinationselektroden kann von Hause aus mit einem entsprechenden Verbindungselement ausgerüstet sein. Zum Annippeln von Elektrodenabschnitten an konventionellen Elektroden muss lediglich der jeweilige neue Elektrodenabschnitt mit einem entsprechenden Verbindungselement versehen werden, was einfach möglich ist, indem das Verbindungselement mit einem Schraubnippel versehen wird, dessen Durchmesser und Gewinde den verwendeten Schraubnippeln zur Verbindung der Elektrodenabschnitte entspricht.

Die erfindungsgemässe Annippelungsvorrichtung ist schliesslich auch für das Nachsetzen der Elektroden während des Betriebs des Ofens geeignet, wodurch deren Anwendungsbereich noch erhöht wird, so dass herkömmliche Nachsetzvorrichtungen entfallen können.

Nachdem die erfindungsgemässe Annippelungsvorrichtung den Elektrodenabschnitt an einem speziellen Anschlusselement erfasst, ist eine Beschädigung des elektrisch leitenden Materials des Elektrodenabschnitts vermieden mit dem Resultat, dass die Elektrode ihren hohen elektrischen Wirkungsgrad stets beibehält.

Vorteilhafte Weiterbildungen der erfindungsgemässen Annippelungsvorrichtung ergeben sich aus den übrigen Patentansprüchen.

Eine vorteilhafte Ausbildung des als Kupplungsvorrichtung dienenden inneren Elements besteht darin, dass diese Kupplungsvorrichtung eine steuerbare Verriegelungseinrichtung für den lösbaren Eingriff mit einem Anschlusselement an einem Elektrodenabschnitt und eine Einführungsanordnung zum Bewegen des Anschlusselements eines Elektrodenabschnitts zu der Verriegelungseinrichtung umfasst und das äussere Element eine zur Stossdämpfung in Einsatzrichtung relativ zur Verriegelungseinrichtung bewegliche Anhängevorrichtung zum Einhängen der Annippelungsvorrichtung an einem Hebezeug aufweist.

Danach weist die Kupplungsvorrichtung der erfindungsgemässen Annippelungsvorrichtung eine steuerbare Verriegelungseinrichtung auf, wobei die Steuerung dieser Verriegelungseinrichtung selbsttätig oder über eine Fernsteuerung von Hand, z.B. durch die Bedienungsperson des Hebezeugs, erreicht werden kann.

Um schon beim Zusammenführen der Annippelungsvorrichtung mit dem Anschlusselement eines Elektrodenabschnitts Handarbeit zu vermeiden, weist die Kupplungsvorrichtung der erfindungsgemässen Annippelungsvorrichtung ferner eine Einführungsanordnung auf, mittels der das Anschlusselement des Elektrodenabschnitts zwangsweise in den Bereich der Verriegelungseinrichtung geführt wird. Der Führer des Hebezeugs muss deshalb die Annippelungsvorrichtung nur in etwa in den Bereich des Anschlusselements eines Elektrodenabschnitts absenken, worauf sich die Kupplungsvorrichtung bzw. deren Verriegelungseinrichtung beim weiteren Absenken der Kupplungsvorrichtung selbsttätig in bezug auf das Abschlusselement zentriert, so dass die Verriegelungseinrichtung der Kupplungsvorrichtung sicher in Eingriff mit dem Anschlusselement des Elektrodenabschnitts gelangt.

Nachdem das Material der einschlägigen Elektroden, z.B. Graphit, in bezug auf Stoss oder dgl. durchaus empfindlich ist, ist bei der Kupplungsvorrichtung der erfindungsgemässen Annippelungsvorrichtung dafür Sorge getragen, dass beim Kupplungsvorgang eine Beschädigung der Elektrode bzw. deren Anschlussteile vermieden wird. Hierzu weist die erfindungsgemässe Annippelungsvorrichtung eine zur Stossdämpfung in Einsatzrichtung relativ zur Verriegelungseinrichtung bewegliche Anhängevorrichtung auf. Durch diese Anordnung werden beim Auftreffen der Annippelungsvorrichtung auf dem Elektrodenabschnitt und beim Anheben bzw. Absenken des Elektrodenabschnitts unzulässige Stosskräfte aufgefangen, wodurch eine Beschädigung der Elektrode, aber auch der übrigen Bauteile, vermieden ist.

Nach einer weiteren vorteilhaften Ausführungsform ist die Verriegelungseinrichtung pneumatisch oder hydraulisch steuerbar. Die Steuerung kann, wie noch näher zu schildern sein wird, beim Aufsetzen der Annippelungsvorrichtung auf den Elektrodenabschnitt bzw. beim Lösen der Vorrichtung von dem Elektrodenabschnitt aufgrund dieses Vorgangs selbst erfolgen bzw. ferngesteuert durch eine Bedienungsperson, z.B. den Führer des Hebezeugs, durchgeführt werden.

Eine besonders einfache Konstruktion der eigentlichen Verriegelungseinrichtung ergibt sich dann, wenn diese einen senkrecht zur Einsatzrichtung von einer Öffnungsstellung in eine Verriegelungsstellung und umgekehrt beweglichen Verriegelungsbolzen umfasst. Dadurch ist nicht nur die Verriegelungseinrichtung selbst besonders einfach und auch betriebssicher ausgebildet, sondern es ergibt sich auch eine unproblematische konstruktive Gestaltung des Anschlusselements des jeweiligen Elektrodenabschnitts.

Dieser Verriegelungsbolzen ist zweckmässigerweise über einen pneumatischen oder hydraulischen Betätigungszylinder beweglich, der die geschilderten Steuerungsmöglichkeiten zulässt.

Um den Betätigungszylinder vor dem rauhen Betrieb bei der Stahlherstellung zu schützen und dessen zuverlässige Funktionsweise zu gewährleisten, ist der Betätigungszylinder im inneren Element oberhalb des Verriegelungsbolzens und parallel zu diesem angeordnet.

Durch diese Anordnungsweise ergibt sich ferner eine einfache Konstruktion der Verriegelungseinrichtung dadurch, dass die Kolbenstange des Betätigungszylinders und der Verriegelungsbolzen endseitig über eine zu der Einsatzrichtung parallele Traverse miteinander verbunden sind.

Bei einer besonders vorteilhaften Ausführungsform der erfindungsgemässen Annippelungsvorrichtung, bei welcher die Kupplungsvorrichtung durch den jeweiligen Betriebsvorgang selbst gesteuert werden kann, ist der Betätigungszylinder über eine Steuereinrichtung derart betätigbar, dass beim Aufsetzen der Annippelungsvorrichtung auf das Anschlusselement eines Elektrodenabschnitts der Verriegelungsbolzen aus der Offenstellung in die Verriegelungsstellung bewegt wird, beim Vorhandensein einer Zugkraft auf die Annippelungsvorrichtung der Verriegelungsbolzen in der Verriegelungsstellung arretiert ist und/oder im zugkraftfreien Zustand bzw. beim Unterschreiten eines bestimmten Mindestwerts der Zugkraft der Verriegelungsbolzen aus der Verriegelungsstellung in die Offenstellung bewegt wird.

Bei dieser Ausführungsform kann die Steuereinrichtung beim Aufsetzen der Annippelungsvorrichtung auf das Anschlusselement eines Elektrodenabschnitts den Steuerimpuls, der vermittels der Steuereinrichtung über den Betätigungszylinder veranlasst, den Verriegelungsbolzen aus der Offenstellung in die Verriegelungsstellung zu bewegen, auf beliebige Weise erhalten. Es ist z.B. möglich, einen mechanischen Fühler vorzusehen, der dann geschaltet wird, wenn das Anschlusselement des Elektrodenabschnitts vollständig in die Einführungsanordnung eingeführt worden ist, da in dieser Stellung dann der Verriegelungsbolzen der Kupplungsvorrichtung in eine entsprechende Öffnung im Anschlusselement des Elektrodenabschnitts einfahren kann.

Solange der jeweilige Elektrodenabschnitt über die Annippelungsvorrichtung am Hebezeug hängt, muss aus Sicherheitsgründen dafür Sorge getragen werden, dass versehentlich nicht die Verriegelungseinrichtung der Kupplungsvorrichtung, z.B. durch einen Bedienungsfehler, gelöst wird. Diese Massgabe wird dadurch erreicht, dass beim Vorhandensein einer Zugkraft auf die Annippelungsvorrichtung der Verriegelungsbolzen der Kuppplungsvorrichtung in der Verriegelungsstellung arretiert ist. Dieses Arretieren ist so zu verstehen, dass selbst bei Betätigen der Vorrichtung, die dazu dient, mittels des Betätigungszylinders den Verriegelungsbolzen aus der Verriegelungsstellung in die Offenstellung zu bewegen, dieser Vorgang solange nicht ausgeführt wird, solange Zugkraft auf die Kupplungsvorrichtung wirkt, d.h. die Elektrode ohne Unterstützung am Haken des Hebezeugs hängt.

Hingegen soll sich beim Absetzen des Elektrodenabschnitts auf dem Boden oder nach dem Verbinden mit einer Elektrode im Ofen die Kupplungsvorrichtung der erfindungsgemässen Annippelungsvorrichtung bei Bedarf durch hydraulische oder pneumatische Betätigung oder selbsttätig, d.h. auf alle Fälle ohne Herangehen einer Bedienungsperson an die Vorrichtung, lösen lassen. Auch diese Aufgabe kann zugkraftabhängig erfüllt werden, indem nur im zugkraftfreien Zustand bzw. beim Unterschreiten eines bestimmten Mindestwerts der auf die Annippelungsvorrichtung wirkenden Zugkraft der Verriegelungsbolzen aus der Verriegelungsstellung in die Offenstellung bewegt wird.

Die auf die Annippelungsvorrichtung wirkende Zugkraft kann auf beliebige Weise gemessen und zur Initiierung einschlägiger Steuerbefehle für die Verriegelungseinrichtung herangezogen werden.

Bei einer bevorzugten Ausführungsform, bei der die Anhängevorrichtung einen Anhängebügel umfasst, der sich an dem äusseren Element der Annippelungsvorrichtung über eine Federanordnung beweglich abstützt, die der im Einsatz auftretenden Zugkraft entgegenwirkt, kann zu dem oben bezeichneten Zweck die Steuereinrichtung für den Betätigungszylinder mit der Federanordnung des Anhängebügels zusammenwirken. In diesem Fall tastet also die Steuereinrichtung den Zustand der Federanordnung ab, um auf diese Weise die auf die Annippelungsvorrichtung wirkende Zugkraft zu erfassen und davon abhängig den Steuerbefehl für die Verriegelungseinrichtung zu erzeugen.

Die angesprochene Ausbildung der Anhängevorrichtung mittels eines abgefederten Anhängebügels ergibt darüber hinaus eine einfache Konstruktion, die trotzdem für ein wirksames Auffangen von Stosskräften sorgt, die beim Ankuppelungsvorgang bzw. beim Absetzen oder Anheben eines Elektrodenabschnitts mittels des Hubzeugs auftreten.

Eine besonders einfache Ausbildung der Einführungsanordnung für das Anschlusselement eines Elektrodenabschnitts in die Kupplungsvorrichtung besteht darin, dass diese Einführungsanordnung aus einem in Einführungsrichtung des Anschlusselements eines Elektrodenabschnitts in die Kupplungsvorrichtung sich verjüngenden, trichterförmigen Wandungselement des inneren Elements gebildet ist. Dieses trichterförmig sich verjüngende Wandungselement kann einstückig mit dem inneren Element ausgebildet werden. An dem inneren Ende dieses trichterförmigen Wandungselements kann zugleich das Lager für den Betätigungszylinder der Verriegelungseinrichtung angeschlossen sein.

Es ist ferner zweckmässig, dass an dem äusseren Element ein vorzugsweise hydraulisch betätigter Motor mit einem Ritzel angeordnet ist, das mit einem Zahnkranz des inneren Elements im Eingriff steht. Dadurch ist eine einfache Antriebsanordnung für das Drehen des inneren Elements in bezug auf das äussere Element geschaffen.

Nach einer vorteilhaften Weiterbildung dieser Antriebsanordnung kann die Achse des Ritzels senkrecht zur Achse der Elemente verlaufen und der Zahnkranz an der unteren Stirnfläche des inneren Elements angeordnet sein. Durch diese Massnahme ergibt sich ein möglichst kleiner Durchmesser für die Gesamtanordnung.

Um stets den jeweiligen Elektrodenabschnitt exakt und mit dem richtigen Anzugselement mit der diesbezüglichen Elektrode zu verbinden, ist es von Vorteil, dass im Getriebezug zwischen dem Motor und dem inneren Element eine Anordnung zur Drehmomentbegrenzung vorgesehen ist. Die Anordnung zur Drehmomentbegrenzung kann in beliebiger und bekannter Weise ausgebildet sein.

Um die pneumatischen oder hydraulischen Leitungen der Baugruppen des inneren Elements in einfacher Weise von aussen in das bewegliche innere Element hineinzuführen, können diese Leitungen über ein an diesem angeordnetes Drehgelenk geführt werden. Auch dieses Drehgelenk kann von beliebiger und bekannter Bauart sein.

Um den an der Annippelungsvorrichtung angekuppelten Elektrodenabschnitt unter Umständen von Hand noch in bezug auf die Annippelungsvorrichtung drehen zu können, ist es vorteilhaft, dass das Anschlusselement mit dem Elektrodenabschnitt um dessen Achse drehbar verbunden ist.

Für den Annippelungsvorgang ist in diesem Fall ein betätigbarer Anschlag zur Drehwegsbegrenzung des Anschlusselements in bezug auf den Elektrodenabschnitt vorhanden.

Um das Anschlusselement auf einfache Weise mit dem jeweiligen Elektrodenabschnitt zu verbinden, ist es zweckmässig, dass die Verbindung über einen Schraubnippel erfolgt, dessen Durchmesser und Gewinde den der Verbindung der Elektrodenabschnitte untereinander dienenden Schraubnippeln, z.B. aus Graphit, entspricht.

Weitere Vorteile und Einzelheiten der Erfindung ergeben sich aus der Beschreibung eines Ausführungsbeispiels der erfindungsgemässen Annippelungsvorrichtung anhand der beigefügten Zeichnungen.

Es zeigt:

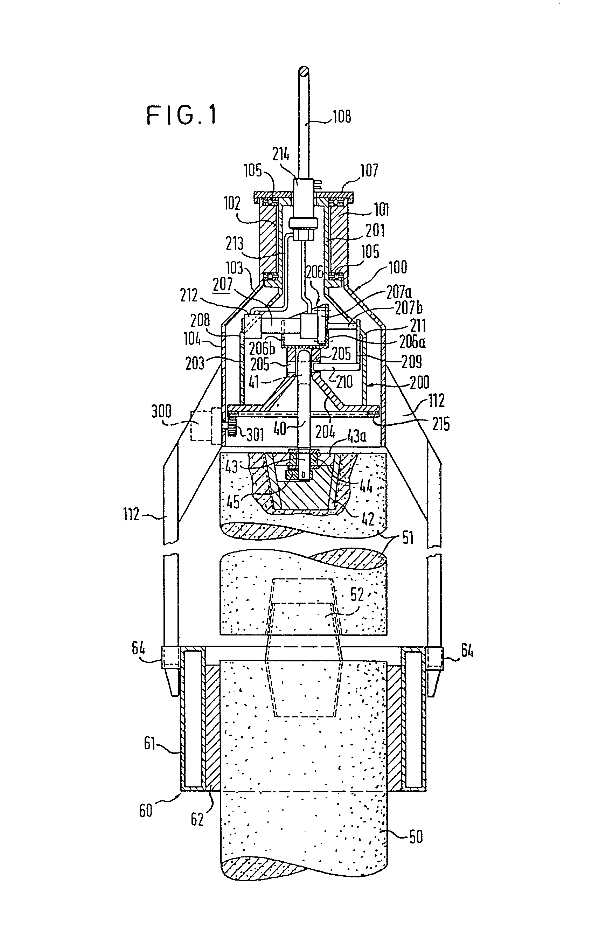

Fig. 1 einen Axialschnitt durch die erfindungsgemässe Annippelungsvorrichtung und

Fig. 2 einen in bezug auf die Fig. 1 um 90° gedrehten Axialschnitt durch diese Annippelungsvorrichtung in Einsatzstellung.

Wie sich aus den Figuren ergibt, besteht die Annippelungsvorrichtung grundsätzlich aus einem äusseren, im wesentlichen hohlzylindrischen Element, das insgesamt mit 100 bezeichnet ist, und einem koaxial im äusseren Element angeordneten inneren, ebenfalls im wesentlichen hohlzylindrischen Element, das insgesamt mit 200 bezeichnet ist.

Das äussere Element 100 umfasst im wesentlichen ein Lagergehäuse 101 mit einer Lagerbohrung 102, einen daran anschliessenden konischen Abschnitt 103 und einen ebenfalls daran anschliessenden zylindrischen Abschnitt 104.

In vergleichbarer Weise setzt sich das innere Element 200 zusammen aus einer zylindrischen Lagerhülse 201, einem daran anschliessenden konischen Abschnitt 202 und einem ebenfalls daran anschliessenden zylindrischen Abschnitt 203.

Die zylindrische Lagerhülse 201 des inneren Elements 200 ist in der Lagerbohrung 102 des äusseren Elements 100 dadurch drehbar gelagert, dass zwei Axiallager 105 und eine Abschlussplatte 107 vorgesehen sind, wodurch über die beschriebene Lageranordnung im wesentlichen axiale Kräfte übertragbar sind.

Das innere Element 200 ist als Kupplungsvorrichtung ausgebildet. Hierfür ist im Inneren des zylindrischen Abschnitts 203 eine trichterförmig sich nach oben verjüngende Einführungsanordnung 204 vorgesehen. In deren Wandungselemente sind zwei Verriegelungsbohrungen 205 vorgesehen, deren Achsen miteinander fluchten und senkrecht zur gemeinsamen Achse der beiden Elemente 100, 200 verlaufen. Am oberen inneren Ende des Wandungselements der Einführungsanordnung 204 stützt sich ein Lagergehäuse 206 ab, in dem ein mit 207 bezeichneter Betätigungszylinder pneumatischer oder hydraulischer Art gelagert ist. Hierzu ist ein Flansch 207a des Betätigungszylinders 207 mit einer zur gemeinsamen Achse der Elemente 100 und 200 parallelen Wand 206a des Lagergehäuses verschraubt, während eine zusätzliche Abstützung des Betätigungszylinders 207 an der zur Wand 206a parallelen Wand 206b des Lagergehäuses 206 erfolgt. Um den Betätigungszylinder einfach in das innere Element 200 einsetzen zu können, weist dieses eine erste Montageöffnung 208 auf. Die Kolbenstange 207b des Betätigungszylinders 207 ist endseitig über eine zur gemeinsamen Achse der Elemente 100 und 200 parallele Traverse 209 mittels eines Verriegelungsbolzens 210 verbunden, dessen Achse senkrecht zur gemeinsamen Achse der Elemente 100 und 200 verläuft und mit den Achsen der Verriegelungsbohrungen 205 fluchtet, so dass der Verriegelungsbolzen 210 in die Verriegelungsbohrungen 205 eingeschoben werden kann und in dieser Lage durch die Verriegelungsbohrungen 205 gelagert ist. Zur Montageerleichterung dieser Anordnung ist der diesbezügliche Wandungsabschnitt des inneren Elements 200 mit einer zweiten Montageöffnung 211 versehen.

Zur Betätigung des Betätigungszylinders 207, d.h. zum Hin- und Herschieben des Kolbens und damit der Kolbenstange 207b und dadurch des Verriegelungsbolzens 210, ist der Betätigungszylinder 207 in üblicher Weise mit einer Steueranordnung, z.B. einer Magnetventilanordnung 212, verbunden. Die Magnetventilanordnung 212 ist ihrerseits über eine Leitung 213 mit einem Drehgelenk 214 verbunden, das selbst mit einer hydraulischen oder pneumatischen Quelle verbunden ist. Das hydraulische Drehgelenk 214 erlaubt also die Leitungsverbindung zwischen einer ortsfesten Quelle und den Leitungen des drehbaren inneren Elements 200.

Um das innere Element 200 relativ zum äusseren Element 100 über die gemeinsame Achse zu drehen, ist an dem äusseren Element 100 ein Hydraulikmotor 300 angeflanscht, der ebenfalls über entsprechende Leitungen und das hydraulische Drehgelenk 214 mit der Quelle verbunden ist. Auf der zur gemeinsamen Achse der Elemente 100 und 200 senkrechten Achse des Motors 300 ist ein Ritzel 301 angeordnet, das in Eingriff steht mit einem an der unteren Stirnfläche des inneren Elements 200 angeordneten Zahnkranz 215.

Um die Annippelungsvorrichtung an den Haken eines Hebezeugs, z.B. eines Hallenkrans, anhängen zu können, ist ein U-förmiger Anhängebügel 108 vorgesehen, der sich über eine Druckfederanordnung 109 an einer Stützplatte 110 abstützt, die mit dem äusseren Element 100 verbunden ist. Damit ist der Anhängebügel 108 in Richtung der gemeinsamen Achse der Elemente 100 und 200, d.h. in Einsatzrichtung, relativ zu den Elementen 100 und 200 beweglich und die auf die Annippelungsvorrichtung ausgeübte Zugkraft wird durch die Druckfederanordnung 109 aufgenommen.

Zur Messung der von der Druckfederanordnung 109 aufgenommenen Zugkraft beim Einsatz der Annippelungsvorrichtung ist dieser Druckfederanordnung 109 eine nur schematisch dargestellte Mess- und Steuereinrichtung 111 zugeordnet, so dass in Abhängigkeit der Zugkraft über die Steueranordnung 212 der Betätigungszylinder 207 der Kupplungsvorrichtung entsprechend gesteuert werden kann.

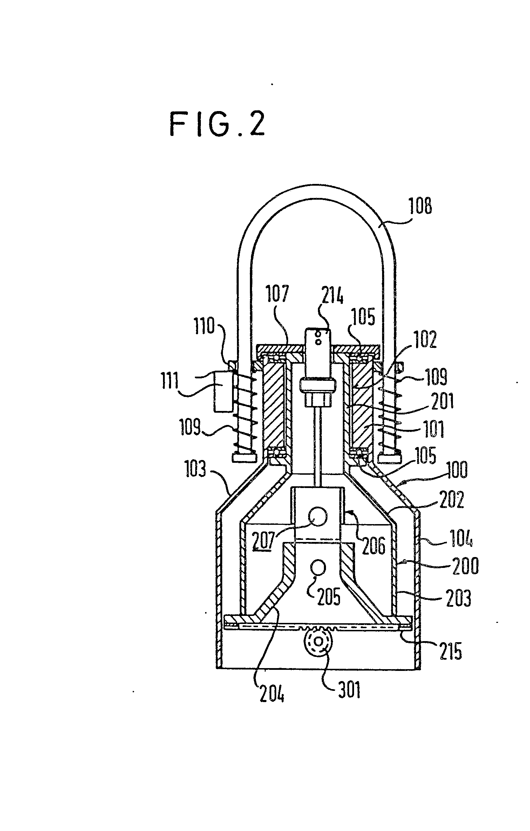

An der Aussenseite des äusseren Elements 100
sind axial sich nach unten erstreckende Stützen
112 angeordnet, mit denen die Annippelungsvorrichtung in noch näher zu schildernder Weise mit
der Elektrodenfassung einer Elektrode eines Elektroofens kuppelbar ist (siehe insoweit Figur 2).

Zum Zusammenwirken mit der beschriebenen
Kupplungsvorrichtung der Annippelungsvorrichtung weist (vgl. ebenfalls Figur 2) der jeweilige
Elektrodenabschnitt 51 an seinem oberen Ende
ein Anschlusselement 40 auf. Dieses ist als Art
Lasche ausgebildet, in der eine Öffnung 41 vorgesehen ist, die zur Aufnahme des Verriegelungsbolzens 210 der Annippelungsvorrichtung
dient. Dieses Anschlusselement 40 ist mit einem
konischen Schraubnippel 42 mit Aussengewinde
drehbar verbunden. Hierfür geht das Anschlusselement 40 in einen Bolzen 43 über, der in eine
Lagermanschette 44 eingesteckt ist, die zentrisch
in einer Stirnplatte 43a des Schraubnippels 42 angeordnet ist. Zur Übertragung von Zugkräften
zwischen dem Anschlusselement 40 und dem
Schraubnippel 42 ist ein Sicherungsbolzen 45
vorgesehen, der zugleich eine Drehwegsbegrenzung bildet, so dass nach einem bestimmten
Drehweg ein Drehmoment zwischen dem Anschlusselement 40 und dem Schraubnippel 42
übertragen werden kann.

Der Schraubnippel 42 ist in eine konische
Schachtel mit Innengewinde am oberen Ende
des Elektrodenabschnitts 51 eingeschraubt.

Vom Elektroofen selbst ist lediglich eine insgesamt mit 60 bezeichnete Elektrodenfassung dargestellt (vgl. im folgenden ebenfalls die Figur 2),
die aus einem eigentlichen Elektrodenhalter 61
und Kontaktbacken 62 besteht. In der Elektrodenfassung 60 ist eine Elektrode 50 eingespannt, an
die in im folgenden zu beschreibender Weise der
Elektrodenabschnitt 51 angenippelt werden soll.
Hierfür ist in der gezeigten Darstellung bereits
das obere Ende der Elektrode 50 mit einem
Schraubnippel 52 üblicher Bauart versehen.

Die Funktionsweise der beschriebenen Annippelungsvorrichtung ist die folgende.

Die Annippelungsvorrichtung wird mittels des
Anhängebügels 108 in den Haken eines Hebezeugs eingehängt. Auf diese Weise kann die Annippelungsvorrichtung angehoben und abgesenkt und verfahren werden.

Zum Erfassen eines neuen Elektrodenabschnitts wird die Annippelungsvorrichtung auf
einen Elektrodenabschnitt 51 abgesenkt, so dass
dessen Anschlusselement 40 in die trichterförmige Einführungsanordnung 204 hineingleitet,
wozu der Verriegelungsbolzen 210 in seiner in der
Figur 2 dargestellten Offenstellung sich befindet.
Sobald die Öffnung 41 des Anschlusselements 40
des Elektrodenabschnitts 51 fluchtend zu den
beiden Verriegelungsbohrungen 205 der Kupplungsvorrichtung der Annippelungsvorrichtung
liegt, wird der Verriegelungsbolzen 210 in die beiden Verriegelungsbohrungen 205 und die Öffnung 41 des Anschlusselements 40 des Elektrodenabschnitts 51 eingeschoben, wofür der Kolben des Betätigungszylinders 207 entsprechend
verschoben wird. Die entsprechende Zuschaltung des Betätigungszylinders 207 kann entweder
über einen beim Einschieben des Anschlusselements 40 des Elektrodenabschnitts 51 in die
trichterförmige Einführungsanordnung 204 der
Annippelungsvorrichtung betätigten Fühler erfolgen oder ferngesteuert durch den Führer des Hebezeugs.

Auf diese Weise ist der anzunippelnde Elektrodenabschnitt 51 mit der Annippelungsvorrichtung gekuppelt. Solange der Elektrodenabschnitt
51 an der Annippelungsvorrichtung und diese
wiederum am Haken des Hebezeugs hängt und
damit eine entsprechende Zugkraft auf die Federanordnung 109 ausgeübt wird, verhindert die
Mess- und Steuervorrichtung 111 ein unbeabsichtigtes Lösen der Kupplungsvorrichtung der
Annippelungsvorrichtung durch Verschieben des
Verriegelungsbolzens 210 aus der Verriegelungsstellung in die Offenstellung.

Wird hingegen der Elektrodenabschnitt 51 entweder am Boden abgesetzt oder endgültig mit
der Elektrode 50 verbunden, worauf der Haken
des Hebezeugs abgesenkt wird, so dass damit die
auf die Federanordnung 109 ausgeübte Zugkraft
einen Minimalwert unterschreitet, kann die Kupplungsvorrichtung der Annippelungsvorrichtung
wieder von dem Elektrodenabschnitt gelöst werden. Die entsprechende Steuerung des Betätigungszylinders 207 kann ebenfalls entweder über
eine Fernsteuerleitung durch die das Hebezeug
bedienende Person erfolgen oder zugkraftabhängig durch einen von der Mess- und Steuereinrichtung 111 erzeugten Impuls bewirkt werden.

Die Annippelungsvorrichtung mit dem erfassten Elektrodenabschnitt 51 wird zur Annippelung
dieses Elektrodenabschnittes an das obere Ende
einer verbrauchten Elektrode derart über den
Ofen geführt, dass die gemeinsame Achse der
Annippelungsvorrichtung und des Elektrodenabschnitts 51 mit der Achse der Elektrode 50 im
Ofen fluchtet. Daraufhin wird die Annippelungsvorrichtung so weit abgesenkt, dass die Stützen
112 in Taschen 64 der Elektrodenfassung 60 eingreifen, so dass das äussere Element 100 der Annippelungsvorrichtung drehfest mit der Elektrodenfassung 60 gekuppelt ist. Diese Absenkbewegung erfolgt zugleich so weit, dass der Schraubnippel 52 der Elektrode 50 im Ofen in Eingriff mit
der Schachtel am unteren Ende des anzunippelnden Elektrodenabschnitts 51 gelangt. Das Aufschrauben des Elektrodenabschnitts 51 auf den
Schraubnippel 52 der Elektrode 50 im Ofen erfolgt durch eine entsprechende Drehbewegung
des inneren Elements 200. Diese Drehbewegung
wird erzeugt durch eine entsprechende Steuerung des Motors 300. Für die Dauer der Schraubbewegung wird durch eine entsprechende automatische Steuerung das Hebezeug entsprechend
der Gewindesteigung des Schraubnippels abgesenkt.

Um den Elektrodenabschnitt 51 mit dem richtigen Anzugsmoment exakt mit der Elektrode 50 zu verbinden, weist der Getriebezug zwischen dem Motor 300 und dem inneren Element 200, d.h. dem Zahnkranz 215, eine Anordnung zur Drehmomentbegrenzung auf, die in beliebiger und bekannter Weise ausgebildet sein kann und deshalb nicht dargestellt ist und nicht näher beschrieben wird.

Um die Verrriegelungseinrichtung der Annippelungsvorrichtung und den Hydraulikmotor 300 von einer Quelle steuern zu können, ist ein Dreiwegventil vorgesehen, über das entweder der Motor 300 oder die Verriegelungseinrichtung bzw. deren Betätigungszylinder 207 angesteuert wird. Dieses Dreiwegventil kann derart ausgebildet sein, dass nach einem geringfügigen Anheben der Annippelungsvorrichtung durch das Hebezeug automatisch von dem Motor 300 auf den Betätigungszylinder 207 derart umgesteuert wird, dass der Betätigungszylinder 207 den Verriegelungsbolzen 210 in die Schliessstellung bewegt.

Nach Beendigung des Annippelungsvorgangs wird die Verriegelungseinrichtung der Annippelungsvorrichtung durch einen entsprechenden Steuerimpuls an deren Betätigungszylinder 207 gelöst, so dass die Annippelungsvorrichtung abgehoben und einem weiteren Betätigungsvorgang zugeführt werden kann.

Mittels der beschriebenen Annippelungsvorrichtung kann auch ein Nachschieben eines Elektrodenstrangs bewirkt werden, indem das Anschlusselement 40 des oberen Elektrodenabschnittes mit der Annippelungsvorrichtung gekuppelt, die Elektrodenfassung des Ofens gelöst, der Elektrodenstrang über das Hebezeug abgesenkt und danach die Elektrodenfassung wieder geschlossen und die Annippelungsvorrichtung abgekuppelt wird.

## Patentansprüche

1. Vorrichtung zum Annippeln von Elektrodenabschnitten an eine in einem Elektroofen insbesondere Lichtbogenofen vertikal und drehfest in eine Elektrodenfassung angeordnete Elektrode mittels eines die Verbindung bildenden Schraubnippels, bestehend aus einem äusseren im wesentlichen hohlzylindrischen Element und einem koaxial im äusseren Element angeordneten inneren, ebenfalls hohlzylindrischen Element, das mittels eines Antriebs relativ in Bezug auf das äussere Element drehbar ist, wobei der anzunippelnde Elektrodenabschnitt mit dem inneren Element drehfest verbindbar ist und das äussere Element in koaxialer Ausrichtung zur Elektrode mit der der Elektrodenabschnitt zu verbinden ist, drehfest in Bezug auf den Ofen mit der Eleketrodenfassung der diesbezüglichen Elektrode kuppelbar ist, wobei das innere Element als Kupplungsvorrichtung ausgebildet ist, dadurch gekennzeichnet, dass die Kupplungsvorrichtung mit einem am oberen Ende des anzunippelnden Elektrodenabschnitts (51) angeordneten Anschlusselement (40) kuppelbar ist, das über einen Schraubnippel (42) mit dem Elektrodenabschnitt (51) verbunden ist.

2. Vorrichtung nach Anspruch 1, dadurch gekennzeichnet, dass die Kupplungsvorrichtung (100) eine steuerbare Verriegelungseinrichtung (207, 210) für den lösbaren Eingriff mit einem Anschlusselement (40) an einem Elektrodenabschnitt (51) und eine Einführungsanordnung (204) zum Bewegen des Anschlusselements (40) eines Elektrodenabschnitts (51) zu der Verriegelungseinrichtung (207, 210) umfasst und das äussere Element (100) eine zur Stossdämpfung in Einsatzrichtung relativ zur Verriegelungseinrichtung (207, 210) bewegliche Anhängevorrichtung (108, 109) zum Einhängen der Annippelungsvorrichtung an einem Hebezeug aufweist.

3. Vorrichtung nach Anspruch 1 und 2, dadurch gekennzeichnet, dass die Verriegelungseinrichtung (207, 210) pneumatisch oder hydraulisch steuerbar ist.

4. Vorrichtung nach einem der vorhergehenden Ansprüche, dadurch gekennzeichnet, dass die Verriegelungseinrichtung einen senkrecht zur Einsatzrichtung von einer Öffnungsstellung in eine Verriegelungsstellung und umgekehrt beweglichen Verriegelungsbolzen (210) umfasst.

5. Vorrichtung nach einem der vorhergehenden Ansprüche, dadurch gekennzeichnet, dass der Verriegelungsbolzen (210) über einen pneumatischen oder hydraulischen Betätigungszylinder (207) beweglich ist.

6. Vorrichtung nach Anspruch 5, dadurch gekennzeichnet, dass der Betätigungszylinder (207) im inneren Element (200) oberhalb des Verriegelungsbolzens (210) und parallel zu diesem angeordnet ist.

7. Vorrichtung nach Anspruch 6, dadurch gekennzeichnet, dass die Kolbenstange (207b) des Betätigungszylinders (207) und der Verriegelungsbolzen (210) endseitig über eine zu der Einsatzrichtung parallele Traverse (209) miteinander verbunden sind.

8. Vorrichtung nach einem der vorhergehenden Ansprüche 5 bis 7, dadurch gekennzeichnet, dass der Betätigungszylinder (207) über eine Steuereinrichtung (212, 111) derart betätigbar ist, dass beim Aufsetzen der Kupplungsvorrichtung auf das Anschlusselement (40) eines Elektrodenabschnitts (51) der Verriegelungsbolzen (210) aus der Offenstellung in die Verriegelungsstellung bewegt wird, beim Vorhandensein einer Zugkraft auf die Annippelungsvorrichtung der Verriegelungsbolzen (210) in der Verriegelungsstellung arretiert ist und/oder im zugkraftfreien Zustand bzw. beim Unterschreiten eines bestimmten Mindestwerts der Zugkraft der Verriegelungsbolzen (210) aus der Verriegelungsstellung in die Offenstellung bewegt wird.

9. Vorrichtung nach einem der vorhergehenden Ansprüche, dadurch gekennzeichnet, dass die Einführungsanordnung aus einem in Einführungsrichtung des Anschlusselements (40) eines Elektrodenabschnitts in die Kupplungsvorrichtung sich trichterförmig verjüngenden Wandungselements (204) des inneren Elements (200) gebildet ist.

10. Vorrichtung nach einem der vorhergehenden Ansprüche, dadurch gekennzeichnet, dass die Anhängevorrichtung einen Anhängebügel (108) umfasst, der sich an dem äusseren Element (100) über eine Federanordnung (109) beweglich abstützt, die der im Einsatz auftretenden Zugkraft entgegenwirkt.

11. Vorrichtung nach den Ansprüchen 8 und 10, dadurch gekennzeichnet, dass die Steuereinrichtung (111) für den Betätigungszylinder (207) mit der Federanordnung (109) des Anhängebügels (108) zusammenwirkt.

12. Vorrichtung nach einem der vorhergehenden Ansprüche, dadurch gekennzeichnet, dass an dem äusseren Element ein vorzugsweise hydraulisch betätigter Motor (300) mit einem Ritzel (301) angeordnet ist, das in einem Zahnkranz (215) des inneren Elements (200) im Eingriff steht.

13. Vorrichtung nach Anspruch 12, dadurch gekennzeichnet, dass die Achse des Ritzels (301) senkrecht zur Achse der Elemente (100, 200) verläuft und dass der Zahnkranz (215) an der unteren Stirnfläche des inneren Elements (200) angeordnet ist.

14. Vorrichtung nach einem der Ansprüche 12 oder 13, dadurch gekennzeichnet, dass im Getriebezug zwischen dem Motor (300) und dem inneren Element (200, 215) eine Anordnung zur Drehmomentbegrenzung vorgesehen ist.

15. Vorrichtung nach einem der vorhergehenden Ansprüche, dadurch gekennzeichnet, dass die pneumatischen oder hydraulischen Leitungen der Baugruppen des inneren Elements (200) über ein an diesem angeordnetes Drehgelenk (214) geführt sind.

16. Vorrichtung nach einem der vorhergehenden Ansprüche, dadurch gekennzeichnet, dass das Anschlusselement (40) mit dem Elektrodenabschnitt (51) um dessen Achse drehbar verbunden ist.

17. Vorrichtung nach Anspruch 16, dadurch gekennzeichnet, dass ein betätigbarer Anschlag (44) zur Drehwegsbegrenzung des Anschlusselements (40) in bezug auf den Elektrodenabschnitt (51) vorhanden ist.

## Claims

1. Device for nippling electrode sections onto an electrode located vertically and in fixed angular orientation to an electrode holder in an electric furnace, especially an arc furnace, by means of screw nipples forming the connection, comprising an outer, essentially hollow cylindrical element and an inner, equally essentially hollow cylindrical element, arranged coaxially within said outer element, said inner element being rotatable, relative to said outer element, by action of a drive means, wherein the electrode section to be nippled on may be connected in fixed angular orientation to said inner element, and wherein said outer element may be coupled with the electrode clamp of the corresponding electrode in coaxial alignment with the electrode to which said electrode section is to be nippled on, and in fixed angular orientation to the furnace, said inner element (200) being designed as coupling means, characterized in that said coupling means may be connected with a connector element (40) located on the top end of said electrode section to be nippled on, which element (40) is connected with the section (51) by means of a screw nipple (42).

2. Device according to claim 1, characterized in that the coupling (100) comprises a controllable locking means (207, 210) for detachable engagement with a connector element (40) on an electrode section (51) and an insertion means (204) to move said connector element (40) of an electrode section (51) to the locking means (207, 210) and the outer element (100) has a suspension means (108, 109) which is movable in the insertion direction relative to the locking means (207, 210) for shock absorption and to suspend the nippling up device on a lifting appliance.

3. Device according to claims 1 and 2, characterized in that the locking means (207, 210) is pneumatically or hydraulically controllable.

4. Device according to one of the claims above, characterized in that the locking means comprises a locking bolt (210) movable perpendicularly to the insertion direction from an open position into a locked position and vice versa.

5. Device according to one of the claims above, characterized in that the locking bolt (210) is movable by a pneumatic or by a hydraulic actuating cylinder (207).

6. Device according to claim 5, characterized in that the actuating cylinder (207) is located in the inner element (200) above the locking bolt (210) and parallel thereto.

7. Device according to claim 6, characterized in that the piston rod (207b) of actuating cylinder (207) and the locking bolt (210) are connected at their ends via a traverse (209) parallel to the insertion direction.

8. Device according to one of the claims above 5-7, characterized in that the actuating cylinder (207) is operable by a control means (212, 111) so that: when the coupling is placed on the connector element (40) of an electrode section (51), the locking bolt (210) is moved from the open position to the locked position; when a tensile force acts on the nippling up device, the locking bolt (210) is held in the locked position; and/or when tensile force is absent or when a certain minimum value of the tensile force is not attained, the locking bolt (210) is moved from the locked position into the open position.

9. Device according to one of the claims above, characterized in that the insertion means is formed by a conical wall element (204) of the inner element (200) which narrows in the insertion direction of the connector element (40) of an electrode section into the coupling.

10. Device according to one of the claims above, characterized in that the suspension means comprises a suspension bracket (108) which is movably supported on the outer element (100) by a spring (109) which counteracts the tensile force arising on insertion.

11. Device according to claims 8 and 10, characterized in that the control means (111) for the actuating cylinder (207) cooperates with the spring (109) of the suspension bracket (108).

12. Device according to one of the claims above, characterized in that on the outer element (100) a preferably hydraulically actuated motor (300) is located with pinion (301) which engages in a ring gear (215) of the inner element (200).

13. Device according to claim 12, characterized in that the axis of the pinion (301) extends perpendicularly to the axis of elements (100, 200) and that the ring gear (215) is located on the bottom face of the inner element (200).

14. Device according to one of the claims 12 or 13, characterized in that in the transmission between the motor (300) and the inner element (200, 215), there is a means for the limitation of torque.

15. Device according to one of the claims above, characterized in that the pneumatic or hydraulic leads of the component groups of the inner element (200) are guided via a swivel joint (214) located thereon.

16. Device according to one of the claims above, characterized in that the connector element (40) is rotatably connected with the electrode section (51) around its axis.

17. Device according to claim 16, characterized in that an operable stop (44) is provided to limit the rotational motion of connector element (40) relative to the electrode section (51).

## Revendications

1. Dispositif pour raccorder des tronçons d'électrodes à une électrode disposée verticalement et verrouillée rotation dans un culot d'électrode à l'intérieur d'un four électrique, notamment d'un four à arc électrique, au moyen d'un raccord fileté établissant la liaison, ce dispositif comprenant un élément externe sensiblement cylindrique et creux, ainsi qu'un élément interne qui est également cylindrique et creux, occupe une position coaxiale dans l'élément externe et peut être mis en rotation au moyen d'un entraînement par rapport à cet élément externe, le tronçon d'électrode devant être raccordé pouvant être relié avec blocage anti-rotation à l'élément interne, et l'élément externe pouvant être accouplé au culot de l'électrode considérée avec blocage antirotation par rapport au four et dans l'alignement coaxial de l'électrode à laquelle le tronçon d'électrode doit être relié, ledit élément interne étant réalisé sous la forme d'un dispositif d'accouplement, caractérisé par le fait que le dispositif d'accouplement peut être accouplé à un organe de liaison (40) installé à l'extrémité supérieure du tronçon d'électrode (51) devant être raccordé, cet ogane étant relié audit tronçon d'électrode (51) par l'intermédiaire d'un raccord fileté (42).

2. Dispositif selon la revendication 1, caractérisé par le fait que le dispositif d'accouplement (200) comprend un dispositif de verrouillage commandable (207, 210) pour la venue en prise amovible avec un organe de liaison (40) sur un tronçon d'électrode (51), ainsi qu'un ensemble d'introduction (204) pour mouvoir l'organe de liaison (40) d'un tronçon d'électrode (51) vers le dispositif de verrouillage (207, 210); et par le fait que l'élément externe (100) présente un dispositif de suspension (108, 109) mobile dans la direction d'utilisation par rapport au dispositif de verrouillage (207, 210), en vue d'amortir les chocs, et destiné à accrocher le dispositif de raccordement à un outil de levage.

3. Dispositif selon les revendications 1 et 2, caractérisé par le fait que le dispositif de verrouillage (207, 210) peut être commandé pneumatiquement ou hydrauliquement.

4. Dispositif selon l'une des revendications précédentes, caractérisé par le fait que le dispositif de verrouillage comporte un tenon de verrouillage (210) mobile perpendiculairement à la direction d'utilisation, d'une position ouverte à une position verrouillée, et inversement.

5. Dispositif selon l'une des revendications précédentes, caractérisé par le fait que le tenon de verrouillage (210) est mobile par l'intermédiaire d'un vérin d'actionnement (207) pneumatique ou hydraulique.

6. Dispositif selon la revendication 5, caractérisé par le fait que le vérin d'actionnement (207) est logé dans l'élément interne (200), au-dessus du tenon de verrouillage (210) et parallèlement à ce dernier.

7. Dispositif selon la revendication 6, caractérisé par le fait que la tige (207b) du piston du vérin d'actionnement (207) et le tenon de verrouillage (210) sont reliés l'un à l'autre, aux extrémités, par l'intermédiaire d'une entretoise (209) parallèle à la direction d'utilisation.

8. Dispositif selon l'une des revendications précédentes, caractérisé par le fait que le vérin d'actionnement (207) peut être manœuvré, par l'intermédiaire d'un dispositif de commande (212, 111), de telle sorte que le tenon de verrouillage (210) soit déplacé de la position ouverte à la position verrouillée lorsque le dispositif d'accouplement est déposé sur l'organe de liaison (40) d'un tronçon d'électrode (51); que, en présence d'une force de traction agissant sur le dispositif de raccordement, le tenon de verrouillage (210) soit arrêté dans la position verrouillée; et/ou que, dans la condition exempte de forces de traction ou bien respectivement lors du dépassement négatif d'une valeur minimale déterminée de la force de traction, ledit tenon de verrouillage (210) soit déplacé de la position verrouillée à la position ouverte.

9. Dispositif selon l'une des revendications précédentes, caractérisé par le fait que l'ensemble d'introduction (204) est formé par une zone de la paroi de l'élément interne (200) accusant une décroissance infundibuliforme de section dans la direction d'introduction de l'organe de liaison (40) d'un tronçon d'électrode dans le dispositif d'accouplement.

10. Dispositif selon l'une des revendications précédentes, caractérisé par le fait que le dispositif de suspension comporte un étrier de suspension (108) prenant appui avec mobilité contre l'élément externe (100), par l'intermédiaire d'un groupe à ressorts (109) agissant à l'encontre de la force de traction qui se manifeste en cours d'utilisation.

11. Dispositif selon les revendicatios 8 et 10, caractérisé par le fait que le dispositif (111) de commande du vérin d'actionnement (207) coopère avec le groupe à ressorts (109) de l'étrier de suspension (108).

12. Dispositif selon l'une des revendications précédentes, caractérisé par le fait que, sur l'élément externe, se trouve un moteur (300) actionné de préférence hydrauliquement et muni d'un pignon (301) qui engrène dans une couronne dentée (215) de l'élément interne (200).

13. Dispositif selon la revendication 12, caractérisé par le fait que l'axe du pignon (301) s'étend perpendiculairement à l'axe des éléments (100, 200); et par le fait que la couronne dentée (215) est disposée à la face extrême inférieure de l'élément interne (200).

14. Dispositif selon l'une des revendications 12 ou 13, caractérisé par le fait qu'un système limiteur de couples de rotation est prévu dans le train d'engrenages entre le moteur (300) et l'élément interne (200, 215).

15. Dispositif selon l'une des revendications précédentes, caractérisé par le fait que les conduits pneumatiques ou hydrauliques des groupes constitutifs de l'élément interne (200) sont guidés par l'intermédiaire d'une articulation tournante (214) qui y est installée.

16. Dispositif selon l'une des revendications précédentes, caractérisé par le fait que l'organe de liaison (40) est relié au tronçon d'électrode (51) en pouvant tourner autour de l'axe de ce dernier.

17. Dispositif selon la revendication 16, caractérisé par le fait qu'une butée manœuvrable (44) est prévue pour limiter la course de rotation de l'organe de liaison (40) par rapport au tronçon d'électrode (51).

FIG.1

# FIG.2